# EUROPÄISCHE PATENTSCHRIFT

(11) **EP 4 026 232 B1**
(45) Veröffentlichungstag und Bekanntmachung des Hinweises auf die Patenterteilung: **25.06.2025**
(21) Anmeldenummer: 20761829.9
(22) Anmeldetag: 26.08.2020
(51) Int. Cl.: H02K 3/28, H02K 3/12, H02K 15/00

(54) **SPULE MIT HAARNADELWICKLUNG SOWIE VERFAHREN ZU DEREN HERSTELLUNG**
COIL WITH HAIRPIN WINDING AND METHOD FOR ITS PRODUCTION
BOBINE AVEC BOBINAGE EN ÉPINGLE ET PROCÉDÉ POUR SA FABRICATION

(30) Priorität: 05.09.2019 DE 102019213474
(43) Veröffentlichungstag der Anmeldung: 13.07.2022
(73) Patentinhaber: ZF Friedrichshafen AG, 88046 Friedrichshafen (DE)
(72) Erfinder: REUTER, Stefan, 97762 Hammelburg (DE); EBERT, Matthias, 97267 Himmelstadt (DE); WITTSTADT, Ralf, 97508 Grettstadt (DE); BRÜCKNER, Christian, 97222 Rimpar (DE); WILLACKER, Katja, 97353 Wiesentheid (DE); LINDWURM, Roland, 97526 Sennfeld (DE); WITTMANN, Jochen, 97705 Burkardroth (DE); WIEDER, Christoph, 96328 Küps (DE)
(86) Internationale Anmeldenummer: PCT/EP2020/073840
(87) Internationale Veröffentlichungsnummer: WO 2021/043645

(56) Entgegenhaltungen:
- WO-A1-2019/062896
- WO-A1-2019/062905
- WO-A1-2019/062908
- US-A1- 2012 007 460

## Beschreibung

Die Anmeldung betrifft die Ausgestaltung einer Hairpinwicklung auf der Seite der zu verbindenden Kontaktbereiche der Hairpins.

Aus dem Stand der Technik ist bekannt, dass vorgeformte Hairpins eingesetzt werden, wodurch jedoch die Montage sehr aufwendig ist. Alternativ ist bekannt, U-förmige Hairpins einzusetzen und anschließend umzuformen. Beispielsweise aus DE 10 2017 201 533 A1 ist eine Hairpinwicklung bekannt.

Um einzelne Endpunkte von Teilspulen zu verbinden, sind zusätzlich Überbrückungsleiter notwendig, wodurch Teilstränge der Wicklungen hergestellt werden. Aufgrund dieser Überbrückungsleiter wird die Anzahl der Bauteile erhöht und es ist ein hoher Fertigungsaufwand für deren Positionierung sowie elektrische leitende Verbindung mit den entsprechenden Kontaktenden erforderlich.

WO2019/062896 A1 ist als nächstliegender Stand der Technik angesehen und offenbart die Merkmale der Präambel des unabhängigen Anspruchs 1. Aus den Druckschriften US2012/007460 A1, WO2019/062908 A1 und WO2019/062905 A1 sind gattungsmäßige Spulen mit Hairpinwicklung bekannt.

Aufgabe der Erfindung ist es eine Spule mit Hairpinwicklung bereitzustellen, bei der die Teilstränge einfach und schnell herstellbar sind sowie ein Verfahren hierfür.

Die erfindungsgemäße Aufgabe wird durch eine Spule mit Hairpinwicklung gemäß den Merkmalen des unabhängigen Anspruchs 1 und durch ein Verfahren zur Herstellung einer Spule mit Hairpinwicklung gemäß den Merkmalen des unabhängigen Anspruchs 8 gelöst. Vorteilhafte Ausgestaltungen der Spule und des Verfahrens werden in den abhängigen Ansprüchen beschrieben.

Gelöst wird die Aufgabe durch eine Spule mit einer aus einer Vielzahl von Hairpins gebildeten, verteilten Wicklung, wobei die Hairpins jeweils zwei gerade Leiterabschnitte aufweisen, welche in unterschiedlichen Nuten eines Spulenkörpers angeordnet sind, wobei sich an die Leiterabschnitte an einem axialen Ende Kontaktbereiche anschließen, welche in Umfangsrichtung umgeformt sind, und die Leiterabschnitte an dem anderen axialen Ende durch einen Wendebereich verbunden sind, wobei in den Nuten des Spulenkörpers jeweils eine geradzahlige Anzahl an Leiterabschnitten in radialer Richtung in Lagen vorgesehen ist, wobei die Kontaktbereiche an ihrem dem Spulenkörper abgewandten Ende einen Verbindungsabschnitt aufweisen und die Verbindungsabschnitte in radial verlaufenden Reihen ausgerichtet sind, wobei die Kontaktbereiche einer Lage in eine gleiche Umfangsrichtung umgeformt sind, dadurch gekennzeichnet, dass ein Teil der Kontaktbereiche einer äußeren Lage in radialer Richtung verformt sind, um eine zusätzliche Lage zu bilden, und diese Kontaktbereiche in eine der Kontaktbereiche der äußeren Lage entgegengesetzte Umfangsrichtung umgeformt sind.

Für einen grundsätzlichen Aufbau einer Hairpinwicklung wird auf die DE 10 2017 201 533 A1 verwiesen, deren Absätze [0005 bis 0012] hiermit in die Beschreibung mit aufgenommen werden.

Damit Kontaktbereiche unterschiedlicher Teilspulen miteinander zu verbinden, wird erfindungsgemäß ein Teil der Kontaktbereiche einer äußeren Lage, welche Kontaktbereiche die ein Ende einer Teilspule darstellen, radial verformt, wodurch eine zusätzliche Lage entsteht. Hinsichtlich der Lagen weist eine erfindungsgemäße Spule somit mehr Lagen auf, als Leiterabschnitte in den Nuten vorgesehen sind. Die äußere Lage kann hierbei eine radial äußerer oder auch eine radial innere Lage sein. Die zusätzliche Lage liegt somit radial innerhalb oder radial außerhalb der weiteren Lagen.

Die zusätzliche Lage sowie die direkt benachbarte äußere Lage weisen entsprechend weniger Kontaktbereiche auf. Erfindungsgemäß werden die BieKontaktbereiche der zusätzlichen Lag zu der direkt benachbarten äußeren Lage in entgegengesetzter Umfangsrichtung umgeformt. Hierdurch werden anschließend Kontaktbereiche, welche ursprünglich in einer gleichen Lage angeordnet waren, direkt miteinander verbunden.

Die Umformung in Umfangsrichtung kann in der zusätzlichen Lage betragsmäßig gleich oder auch unterschiedliche bezogen auf die direkt benachbarte äußere Lage sein. Hierdurch kann entsprechend der zwischen den zu verbindenden Kontaktbereichen liegende Wickelschritt entsprechend den Anforderungen angepasst werden.

Ausführungsformen einer Spule sind dadurch gekennzeichnet, dass an beiden äußeren Lagen ein Teil der Kontaktbereiche in radialer Richtung verformt sind und eine zusätzliche Lage bilden. Somit sind auch Ausführungsformen möglich, bei denen sowohl radial innen als auch radial außen eine zusätzliche Lage gebildet wird. Derartige Ausführungen weisen insbesondere Vorteile auf, bei Spulen, welche mehrere koaxiale Hairpinwicklungen und/oder Kontaktbereiche zur Verbindung mit einer Verschaltung beziehungsweise mit einer Leistungselektronik in mittleren Lagen aufweisen.

Spulen gemäß Ausführungsformen sind dadurch gekennzeichnet, dass durch die Kontaktbereiche in der zusätzlichen Lage ein Teil der Reihen eine ungerade Anzahl an Lagen aufweisen, und dass in diesen Reihen die Kontaktbereiche zur Verbindung mit einer Verschaltung vorgesehen sind und die weiteren Kontaktbereiche mit ihren Verbindungsabschnitten zu Kontaktpaaren elektrisch leitend verbunden sind. Abhängig vom Wickelschritt der Umformung sowie der Position der Kontaktbereiche am Umfang sind die Verbindungsabschnitte der Kontaktbereiche in der zusätzlichen Lage vorteilhafterweise in Reihen angeordnet, in denen auch ein Kontaktbereich zur Verbindung mit einer Verschaltung beziehungsweise Leistungselektronik angeordnet ist. Hierdurch werden wieder ausreichend Kontaktbereiche in der Reihe bereitgestellt um abgesehen von dem mit der Verschaltung zu verbindenden Kontaktbereich alle anderen Kontaktbereiche mit ihren Verbindungsabschnitten zu Kontaktpaaren zu verbinden.

Entsprechend liegen in der äußeren Lage an den Positionen der in die zusätzliche Lage gebrachten Kontaktbereich Lücken vor, weshalb in diesen Reihen nach der Umformung ebenfalls eine ungerade Anzahl an Kontaktbereichen vorgesehen ist. Auch in diesen Reihen befinden sich vorzugsweise Kontaktbereiche zur Verbindung mit einer Verschaltung beziehungsweise Leistungselektronik.

Die neben den für die Verbindung mit der Verschaltung vorgesehenen Kontaktbereichen entstandenen Kontaktpaare dieser Reihen mit ungerader Anzahl an Kontaktbereichen dienen vorzugsweise als Übergänge zwischen den einzelnen Teilsträngen benachbarter Doppellage zu verbinden beziehungsweise in der zusätzlichen Lage mit einem Teilstrang einer gleichen Doppellage zu verbinden.

Bei Ausführungen mit einer zusätzlichen Lage an beiden radial äußeren Lagen, wie beispielsweise mehreren koaxialen Hairpinwicklungen, bezieht sich die ungerade Anzahl jeweils auf eine der einzelnen Hairpinwicklungen.

Ausführungen einer Spule sind dadurch gekennzeichnet, dass die Hairpinwicklung aus mehreren Teilsträngen, wie unterschiedliche Phasen und/oder parallele Stränge, besteht, und dass pro Teilstrang ein Kontaktbereich in der zusätzlichen Lage angeordnet ist. Als Teilstrang wird hierbei ein Teilbereich verstanden, welcher einer verteilten Wicklung, die über Wendebereiche und Kontaktpaare verbundenen Leiterabschnitte gebildet ist, entspricht und zwischen den Kontaktbereichen zur Verbindung mit einer Leistungselektronik liegt sowie die Lagen in radialer Richtung zweimal, je einmal von innen nach außen und von außen nach innen, durchläuft. Durchläuft die verteilte Wicklung die Lagen mehr als zweimal, beispielsweise wenn die Kontaktbereiche zur Verbindung mit einer Leistungselektronik auf unterschiedlichen Lagen liegen oder die verteilte Wicklung mehrfach die Lagen in beide radiale Richtungen durchläuft, werde diese jeweils entsprechend als mehrere Teilstränge gesehen. Um diese Teilstränge, genauer deren Leiterabschnitte in der äußeren Lage oder Doppellage, bei der Umkehr der Durchlaufrichtung in radialer Richtung zu verbinden, wird pro Teilstrang ein Kontaktbereich in die zusätzliche Lage gebracht. Somit kann der Verbindungsabschnitt des Kontaktbereichs in der zusätzlichen Lage mit einem Verbindungsabschnitt eines Kontaktbereichs in der äußeren Lage zu einem Kontaktpaar elektrisch leitend verbunden werden.

Ausführungsformen einer Spule sind dadurch gekennzeichnet, dass die Kontaktbereiche der zusätzlichen Lage um eine gleiche Schrittweite wie die weiteren Kontaktbereiche umgeformt sind. Hierdurch kann eine einheitliche Schrittweite der Wicklung beibehalten werden.

Andere Ausführungsformen einer Spule sind dadurch gekennzeichnet, dass die Kontaktbereiche der zusätzlichen Lage um eine andere Schrittweite als die weiteren Kontaktbereiche umgeformt sind. Hierdurch sind abhängig von der Ausbildung der Hairpinwicklung beispielsweise Wechsel der Nuten eines Pols und/oder Sehnungen einfach herstellbar.

Ein weiterer Aspekt der Anmeldung ist eine elektrische Maschine, dadurch gekennzeichnet, dass eine Spule gemäß einer erfindungsgemäßen Ausführungsform vorgesehen ist.

Ebenfalls eine Aspekt der Anmeldung ist ein Verfahren zur Herstellung einer erfindungsgemäßen Spule umfassend die Schritte:
a) Einbringen der Hairpins in den Spulenkörper, wobei die Kontaktbereiche mit den Leiterabschnitten fluchten;
b) Umformen eines Teils der Kontaktbereiche einer äußeren Lage in radialer Richtung, um diese in einer zusätzlichen Lage anzuordnen;
c) Umformen der Kontaktbereiche der Lagen in Umfangsrichtung, wobei die Verbindungsbereiche in radial verlaufenden Reihen angeordnet werden.

Vorteilhafterweise sind die Hairpins vor dem Einsetzen in die Nuten des Spulenkörpers als zwei parallel verlaufende Leiterabschnitte gebildet, welche über einen Wendebereich miteinander verbunden sind und sich an die Leiterabschnitte fluchtend jeweils ein Kontaktbereich anschließt. Von dieser Grundform leitet sich auch die Bezeichnung Hairpin ab. Die fluchtenden Kontaktbereiche weisen den Vorteil auf, dass sich die Hairpins einfacher und kompakter in die Nuten einsetzen lassen.

Nachdem die Hairpins in den Spulenkörper eingesetzt sind, werden ein Teil der Kontaktbereiche einer äußeren Lage, in radialer Richtung von den weiteren Lagen weg, umgeformt, um diese in eine zusätzliche Lage zu bringen.

Die aus dem Spulenkörper axial vorstehenden Kontaktbereiche werden in unterschiedliche Umfangsrichtungen umgeformt, damit die Verbindungsabschnitte von Kontaktbereichen benachbarter Lagen zueinander ausgerichtet werden.

Ausführungsformen eines Verfahrens sind dadurch gekennzeichnet, dass die Schritte b) und c) gleichzeitig erfolgen. Neben einer sequentiellen Abarbeitung der Verfahrensschritte ist es auch möglich, dass die Umformungen, zumindest der äußeren und der zusätzlichen Lage gleichzeitig erfolgen. Durch eine entsprechende Ausbildung eines Twistwerkzeugs zur Herstellung der Umformung in Umfangsrichtung, können ein Teil der Kontaktbereich der äußeren Lage anstelle eine Umfangsrichtung durch das Werkzeugteil in radialer Richtung ausgelenkt und von einem anderen Teil des Werkzeugs aufgenommen werden. Vorzugsweise führt das andere Teil des Werkzeugs eine zu Werkzeugteil für die äußere Lage entgegengesetzte Bewegung in Umfangsrichtung aus, um die Kontaktbereiche der zusätzlichen Lage in Umfangsrichtung umzuformen.

Verfahren gemäß Ausführungsformen sind dadurch gekennzeichnet, dass in einem folgenden Schritt d) Verbindungsabschnitte benachbarter Kontaktbereiche in einer Reihe zu Kontaktpaaren verschweißt werden. Die aus dem Spulenkörper an einer axialen Seite vorstehenden, umgeformten Kontaktbereiche sind derart zueinander ausgerichtet, dass die Verbindungsabschnitte von Kontaktbereichen benachbarter Lagen derart zu Kontaktpaaren elektrisch leitend verbunden werden können, sofern sie nicht zur Anbindung an eine Verschaltung beziehungsweise Leistungselektronik vorgesehen sind.

Neben diesen Ausführungen zum Verfahren ist ebenfalls die weitere Beschreibung zu der Spule sowie elektrischen Maschine analog gültig.

Im Folgenden wird die Erfindung anhand von Figuren näher erläutert. Gleiche oder ähnliche Bauteile werden mit einheitlichen Bezugszeichen bezeichnet. Die Figuren zeigen im Einzelnen:
- Fig. 1: zeigt eine schematische Ansicht eines Ausführungsbeispiels aus axialer Richtung.
- Fig. 2: zeigt einen Teilabschnitt eines Ausführungsbeispiels.
- Fig. 3: zeigt eine perspektivische Ansicht eines weiteren Ausführungsbeispiels.

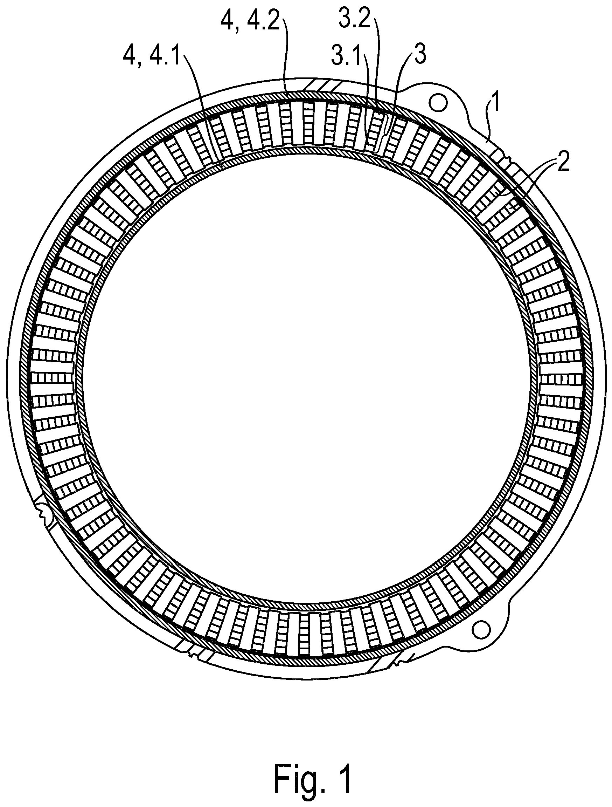

In Fig. 1 ist ein schematisch dargestelltes Ausführungsbeispiel einer Spule aus axialer Richtung gezeigt. Die Spule weist einen Spulenkörper (1) auf, welcher vorzugsweise aus geschichteten Blechen gebildet ist. Im Spulenkörper (1) sind eine Vielzahl von axial verlaufenden Nuten vorgesehen, in denen die Leiterabschnitte der Hairpins (2) in mehreren radial geschichteten Lagen (3; 3.1; 3.2) angeordnet sind. Im dargestellten Beispiel sind sechs Lagen (3; 3.1; 3.2) von Hairpins (2) vorgesehen, wobei auch eine andere geradzahlige Anzahl von Lagen (3; 3.1; 3.2) möglich sind. Es ist stets eine gerade Anzahl von Lagen (3; 3.1; 3.2) vorgesehen, da Hairpins (2) in der Regel innerhalb einer Doppellagen miteinander elektrisch leitend verbunden sind. Durchlaufen die aus miteinander verbundenen Hairpins (2) gebildeten Teilspule mehrere Doppellagen weisen diese jeweils untereinander Übergabekontakte auf. Häufig durchlaufen die Teilspulen die Lagen (3; 3.1; 3.2) mehrfach in radialer Richtung, beispielsweise von einer äußeren Lage (3.1; 3.2) zur anderen äußeren Lage (3.1; 3.2) und zurück. In diesen Fällen müssen die Hairpins (2) der gegenläufigen Stränge in der äußeren Doppellage verbunden werden.

Gemäß Ausführungsformen der Erfindung werden hierzu ein der Teil der Kontaktbereiche (2.1) der Hairpins (2) der entsprechenden äußeren Lage (3.1; 3.2) in eine zusätzliche Lage (4; 4.1; 4.2) gebracht. In Fig. 1 sind mit schraffierten Ringflächen jeweils die Position einer möglichen zusätzlichen Lage (4; 4.1; 4.2) gezeigt. Eine radial innenliegende zusätzliche Lage (4.1) würde entsprechend einen Teil der ursprünglich in der radial inneren äußeren Lage (3.1) Kontaktbereich (2.1) aufnehmen beziehungsweise würde in einer radial außenliegenden zusätzlichen Lage (4.2) Kontaktbereiche (2.1) einer radial äußeren Lage (3.2) aufgenommen werden.

Die Kontaktbereiche (2.1) in der zusätzlichen Lage (4; 4.1; 4.2) werden nach einer Umformung in Umfangsrichtung mit ebenfalls in Umfangsrichtung umgeformten Kontaktbereiche der Hairpins (2) der entsprechenden äußeren Lage (3.1; 3.2) elektrisch leitend verbunden.

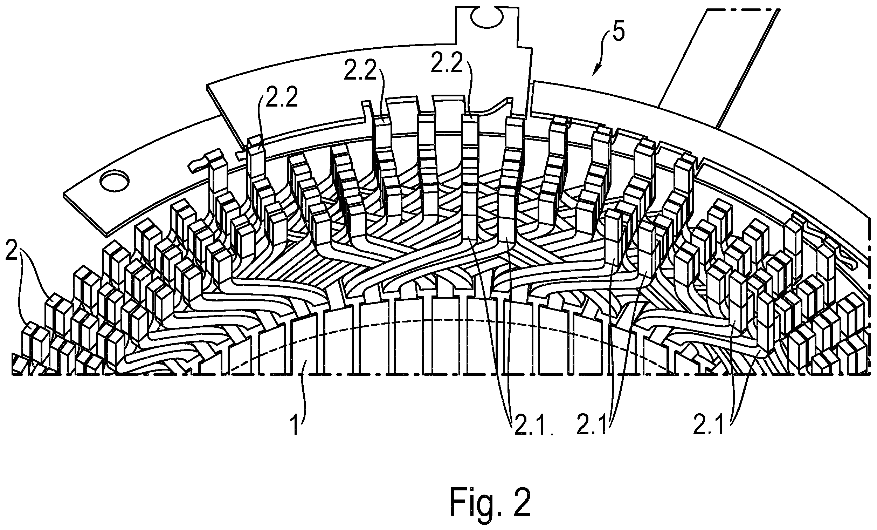

Fig. 2 zeigt eine perspektivische Ansicht eines Teilbereichs einer Spule in einem Ausführungsbeispiel. Hier sind ebenfalls sechs Lagen (3; 3.1; 3.2) von Hairpins (2) in den Nuten des Spulenkörpers (1) vorgesehen.

Benachbart zu der radial innenliegenden Lage (3.1) ist eine zusätzliche Lage (4.1) vorgesehen. Ein Teil der Kontaktbereiche (2.1) sind aus der äußeren Lage (3.1) in die zusätzliche Lage (4.1) umgeformt.

Die Kontaktbereiche (2.1) in der zusätzlichen Lage (4.1) sind, wie die Kontaktbereiche der anderen Lagen (3; 3.1; 3.2) in Umfangsrichtung umgeformt, um mit anderen Kontaktbereichen jeweils zu Kontaktpaaren zusammengefasst sind. Die Richtung der Umformung in Umfangsrichtung ist hierbei der Richtung der äußeren Lage (3.1) entgegengesetzt, wodurch ein Wickelschritt erreicht wird.

Aufgrund der in die zusätzliche Lage (4.1) umgeformten Kontaktbereiche (2.1) sowie der gegenläufigen Verschränkung durch die Umformung in Umfangsrichtung entstehen radiale Reihen von umgeformten Kontaktbereichen mit einer von der Lagenzahl abweichenden Anzahl von Kontaktbereichen. Im gezeigten Ausführungsbeispiel sind neben den radialen Reihen mit den der Lagenzahl entsprechenden sechs, jeweils zu drei Kontaktpaaren, verbundenen Kontaktbereiche auch Reihen mit fünf und sieben Kontaktbereichen vorhanden. In diesen Reihen mit ungerader Anzahl sind neben Kontaktpaaren noch die Kontaktbereiche (2.2) für die Verbindung mit einer Verschaltung (5) vorgesehen.

Über die Verschaltung (5) werden die Kontaktbereiche (2.2) der Teilspulen gegebenenfalls miteinander sowie mit einer Leistungselektronik verbunden.

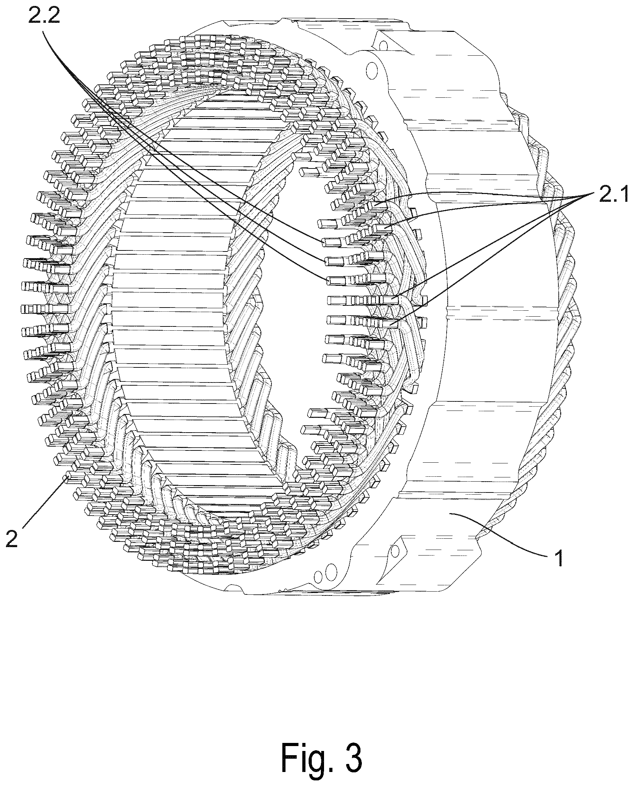

Bei dem in Fig. 3 dargestellten Ausführungsbeispiel ist die zusätzliche Lage (4.2) benachbart zu der radial äußeren Lage (3.2) angeordnet. Die in der zusätzlichen Lage (4.2) umgeformten Kontaktbereiche (2.1) verlaufen somit entlang einer äußeren Umfangsfläche.

In diesem Ausführungsbeispiel sind die Kontaktbereiche (2.2) für die Verbindung mit einer in Fig. 3 nicht dargestellten Verschaltung (5) an der radial inneren Lage (3.1) vorgesehen.

Im Weiteren ist das in Fig. 3 dargestellte Ausführungsbeispiel weitestgehend analog zu dem in Fig. 2 gezeigtem, weshalb auf die obige Beschreibung verwiesen wird.

Abhängig vom vorhandenen Bauraum und der Konstruktion sowie dem Spulendesign kann die zusätzliche Lage (4.1; 4.2) entgegen den dargestellten Ausführungsbeispielen gegebenenfalls auch auf beiden radialen Seiten eine zusätzliche Lage (4; 4.1; 4.2) vorgesehen sein, wie beispielsweise in Fig. 1 angedeutet.

Die Erfindung ist nicht auf die beschriebenen Ausführungen eingeschränkt. Es können wie oben ausgeführt, im Umfang der beigefügten Anprüche auch nur einzelne vorteilhafte Merkmale vorgesehen werden beziehungsweise verschiedene Merkmale unterschiedlicher Beispiele miteinander kombiniert werden.

### Bezugszeichen

- 1: Spulenkörper
- 2: Hairpin
- 2.1: Kontaktbereich in zusätzlicher Lage
- 2.2: Kontaktbereich zur Verbindung mit einer Verschaltung
- 3: Lage von Hairpins
- 3.1: Radial innenliegende äußere Lage
- 3.2: Radial außenliegende äußere Lage
- 4: Zusätzliche Lage
- 4.1: Zusätzliche Lage (radial innenliegend)
- 4.2: Zusätzliche Lage (radial außenliegend)
- 5: Verschaltung

## Patentansprüche

1. Spule mit einer aus einer Vielzahl von Hairpins (2) gebildeten, verteilten Wicklung,
wobei die Hairpins (2) jeweils zwei gerade Leiterabschnitte aufweisen, welche in unterschiedlichen Nuten eines Spulenkörpers (1) angeordnet sind, wobei sich an die Leiterabschnitte an einem axialen Ende Kontaktbereiche (2.1) anschließen,
welche in Umfangsrichtung umgeformt sind, und die Leiterabschnitte an dem anderen axialen Ende durch einen Wendebereich verbunden sind,
wobei in den Nuten des Spulenkörpers (1) jeweils eine geradzahlige Anzahl an Leiterabschnitten in radialer Richtung in Lagen (3; 3.1; 3.2) vorgesehen ist, wobei die Kontaktbereiche (2.1) an ihrem dem Spulenkörper (1) abgewandten Ende einen Verbindungsabschnitt aufweisen und die Verbindungsabschnitte in radial verlaufenden Reihen ausgerichtet sind,
wobei die Kontaktbereiche (2.1) einer Lage (3; 3.1; 3.2) in eine gleiche Umfangsrichtung umgeformt sind,
**dadurch gekennzeichnet, dass** ein Teil der Kontaktbereiche (2.1) einer äußeren Lage (3.1; 3.2) in radialer Richtung verformt sind, um eine zusätzliche Lage (4; 4.1; 4.2) zu bilden, wodurch die Kontaktbereiche (2.1) in mehr Lagen als Leiterabschnitte in den Nuten angeordnet sind, und diese Kontaktbereiche (2.1) in eine der Kontaktbereiche (2.1) der äußeren Lage (3.1 ;3.2) entgegengesetzte Umfangsrichtung umgeformt sind, wodurch die Kontaktbereiche (2.1) der zusätzlichen Lage (4;4.1;4.2) in einer gleichen Reihe mit Kontaktbereichen (2.1) der äußeren Lage (3.1;3.2) zur direkten Verbindung mit diesen angeordnet sind.

2. Spule nach Anspruch 1, **dadurch gekennzeichnet, dass** an beiden äußeren Lagen (3.1; 3.2) ein Teil der Kontaktbereiche (2.1) in radialer Richtung verformt sind und eine zusätzliche Lage (4; 4.1; 4.2) bilden.

3. Spule nach Anspruch 1 oder 2, **dadurch gekennzeichnet, dass** durch die Kontaktbereiche (2.1) in der zusätzlichen Lage (4; 4.1; 4.2) ein Teil der Reihen eine ungerade Anzahl an Lagen aufweisen, und dass in diesen Reihen die Kontaktbereiche (2.1) zur Verbindung mit einer Verschaltung vorgesehen sind und die weiteren Kontaktenden mit ihren Verbindungsabschnitten zu Kontaktpaaren elektrisch leitend verbunden sind.

4. Spule nach einem der vorangegangenen Ansprüche, **dadurch gekennzeichnet, dass** die Spule aus mehreren Teilsträngen, wie unterschiedliche Phasen und/oder parallele Stränge, besteht, und dass pro Teilstrang ein Kontaktbereich (2.1) in der zusätzlichen Lage angeordnet ist.

5. Spule nach einem der vorangegangenen Ansprüche, **dadurch gekennzeichnet, dass** die Kontaktbereiche (2.1) der zusätzlichen Lage (4; 4.1; 4.2) um eine gleiche Schrittweite wie die weiteren Kontaktbereiche (2.1) umgeformt sind.

6. Spule nach einem der Ansprüche 1 bis 4, **dadurch gekennzeichnet, dass** die Kontaktbereiche (2.1) der zusätzlichen Lage (4; 4.1; 4.2) um eine andere Schrittweite als die weiteren Kontaktbereiche (2.1) umgeformt sind.

7. Elektrische Maschine, **dadurch gekennzeichnet, dass** eine Spule der elektrischen Maschine gemäß einem der Ansprüche 1 bis 6 vorgesehen ist.

8. Verfahren zur Herstellung einer Spule gemäß einem der Ansprüche 1 bis 6 umfassend die Schritte:
a) Einbringen der Hairpins (2) in den Spulenkörper (1), wobei die Kontaktbereiche (2.1) mit den Leiterabschnitten fluchten;
b) Umformen eines Teils der Kontaktbereiche (2.1) einer äußeren Lage (3.1; 3.2) in radialer Richtung, um diese in einer zusätzlichen Lage (4; 4.1; 4.2) anzuordnen;
c) Umformen der Kontaktbereiche (2.1) der Lagen (3;3.1;3.2) in Umfangsrichtung, wobei
die Verbindungsbereiche in radial verlaufenden Reihen angeordnet werden.

9. Verfahren nach Anspruch 8, **dadurch gekennzeichnet, dass** die Schritte b) und c) gleichzeitig erfolgen.

10. Verfahren nach Anspruch 8 oder 9, **dadurch gekennzeichnet, dass** in einem folgenden Schritt d) Verbindungsabschnitte benachbarter Kontaktbereiche (2.1) in einer Reihe zu Kontaktpaaren verschweißt werden.

## Claims

1. Coil with a distributed winding formed from a plurality of hairpins (2), wherein the hairpins (2) each have two straight conductor portions which are arranged in different grooves of a coil body (1), wherein contact regions (2.1) which are formed in the circumferential direction adjoin the conductor portions at one axial end, and the conductor portions are connected at the other axial end by a turning region, wherein an even number of conductor portions is provided in the radial direction in layers (3; 3.1; 3.2) in the grooves of the coil body (1), wherein the contact regions (2.1) have a connecting portion at their end facing away from the coil body (1) and the connecting portions are aligned in radially running rows, wherein the contact regions (2.1) of a layer (3; 3.1; 3.2) are formed in the same circumferential direction, **characterized in that** some of the contact regions (2.1) of an outer layer (3.1; 3.2) are deformed in the radial direction in order to form an additional layer (4; 4.1; 4.2), as a result of which the contact regions (2.1) are arranged in more layers than conductor portions in the grooves, and these contact regions (2.1) are formed in a circumferential direction opposite to the contact regions (2.1) of the outer layer (3.1; 3.2), as a result of which the contact regions (2.1) of the additional layer (4; 4.1; 4.2) are arranged in the same row with contact regions (2.1) of the outer layer (3.1; 3.2) for direct connection to these.

2. Coil according to Claim 1, **characterized in that**, on both outer layers (3.1; 3.2), some of the contact regions (2.1) are deformed in the radial direction and form an additional layer (4; 4.1; 4.2).

3. Coil according to Claim 1 or 2, **characterized in that**, due to the contact regions (2.1) in the additional layer (4; 4.1; 4.2), some of the rows have an odd number of layers, and **in that** in these rows the contact regions (2.1) are provided for connection to an interconnection and the further contact ends are electrically conductively connected to their connecting portions to form contact pairs.

4. Coil according to any one of the preceding claims, **characterized in that** the coil consists of several sub-strands, such as different phases and/or parallel strands, and that a contact region (2.1) is arranged in the additional layer for each sub-strand.

5. Coil according to any one of the preceding claims, **characterized in that** the contact regions (2.1) of the additional layer (4; 4.1; 4.2) are formed by the same step size as the further contact regions (2.1).

6. Coil according to any one of Claims 1 to 4, **characterized in that** the contact regions (2.1) of the additional layer (4; 4.1; 4.2) are formed by a different step size than the further contact regions (2.1).

7. Electrical machine, **characterized in that** a coil of the electrical machine according to any one of Claims 1 to 6 is provided.

8. Method for producing a coil according to any one of Claims 1 to 6, comprising the steps:
a) introducing the hairpins (2) into the coil body (1), wherein the contact regions (2.1) are aligned with the conductor portions;
b) forming some of the contact regions (2.1) of an outer layer (3.1; 3.2) in the radial direction in order to arrange them in an additional layer (4; 4.1; 4.2);
c) forming the contact regions (2.1) of the layers (3; 3.1; 3.2) in the circumferential direction, wherein the connecting regions are arranged in radially running rows.

9. Method according to Claim 8, **characterized in that** the steps b) and c) take place simultaneously.

10. Method according to Claim 8 or 9, **characterized in that**, in a subsequent step d), connecting portions of adjacent contact regions (2.1) are welded in a row to form contact pairs.

## Revendications

1. Bobine comprenant un enroulement distribué, formé d'une pluralité d'épingles à cheveux (2),
les épingles à cheveux (2) possédant respectivement deux portions de conducteur droites, lesquelles sont disposées dans des rainures différentes d'un corps de bobine (1), des zones de contact (2.1), qui sont façonnées dans la direction circonférentielle, se raccordant aux portions de conducteur au niveau d'une extrémité axiale, et les portions de conducteur étant connectées à l'autre extrémité axiale par une zone de retournement,
un nombre pair de portions de conducteur étant respectivement prévu dans les rainures du corps de bobine (1) en couches (3 ; 3.1 ; 3.2) dans la direction radiale, les zones de contact (2.1) possédant, au niveau de leur extrémité opposée au corps de bobine (1), une portion de connexion, et les portions de connexion étant orientées en rangées qui suivent un tracé radial,
les zones de contact (2.1) d'une couche (3 ; 3.1 ; 3.2) étant façonnées dans une même direction circonférentielle,
**caractérisée en ce qu'**une partie des zones de contact (2.1) d'une couche extérieure (3.1 ; 3.2) sont façonnées dans la direction radiale afin de former une couche supplémentaire (4 ; 4.1 ; 4.2), moyennant quoi les zones de contact (2.1) sont disposées dans les rainures en plus de couches que les portions de conducteur, et ces zones de contact (2.1) sont façonnées dans une direction circonférentielle opposée à l'une des zones de contact (2.1) de la couche extérieure (3.1 ; 3.2), moyennant quoi que les zones de contact (2.1) de la couche supplémentaire (4 ; 4.1 ; 4.2) sont disposées dans une même rangée avec les zones de contact (2.1) de la couche extérieure (3.1 ; 3.2) pour une connexion directe avec celles-ci.

2. Bobine selon la revendication 1, **caractérisée en ce qu'**au niveau des deux couches extérieures (3.1 ; 3.2), une partie des zones de contact (2.1) sont déformées dans la direction radiale et forment une couche supplémentaire (4 ; 4.1 ; 4.2).

3. Bobine selon la revendication 1 ou 2, **caractérisée en ce que** du fait des zones de contact (2.1) dans la couche supplémentaire (4 ; 4.1 ; 4.2), une partie des rangées présente un nombre impair de couches, et **en ce que** dans ces rangées, les zones de contact (2.1) sont prévues pour la connexion à un circuit et les extrémités de contact supplémentaires sont reliées de manière électriquement conductrice à des paires de contacts par leurs portions de connexion.

4. Bobine selon l'une des revendications précédentes, **caractérisée en ce que** la bobine est constituée de plusieurs brins partiels, tels que des phases différentes et/ou des brins parallèles, et **en ce qu'**une zone de contact (2.1) est disposée dans la couche supplémentaire pour chaque brin partiel.

5. Bobine selon l'une des revendications précédentes, **caractérisée en ce que** les zones de contact (2.1) de la couche supplémentaire (4 ; 4.1 ; 4.2) sont façonnées d'un pas identique à celui des zones de contact (2.1) supplémentaires.

6. Bobine selon l'une des revendications 1 à 4, **caractérisée en ce que** les zones de contact (2.1) de la couche supplémentaire (4 ; 4.1 ; 4.2) sont façonnées d'un pas différent de celui des zones de contact (2.1) supplémentaires.

7. Machine électrique, **caractérisée en ce qu'**une bobine de la machine électrique est prévue conformément à l'une des revendications 1 à 6.

8. Procédé de fabrication d'une bobine selon l'une des revendications 1 à 6, comprenant les étapes suivantes :
a) insertion des épingles à cheveux (2) dans le corps de bobine (1), les zones de contact (2.1) étant alignées avec les portions de conducteur ;
b) façonnage d'une partie des zones de contact (2.1) d'une couche extérieure (3.1 ; 3.2) dans la direction radiale afin de les disposer dans une couche supplémentaire (4 ; 4.1 ; 4.2) ;
c) façonnage des zones de contact (2.1) des couches (3 ; 3.1 ; 3.2) dans la direction circonférentielle, les zones de connexion étant disposées en rangées qui suivent un tracé radial.

9. Procédé selon la revendication 8, **caractérisé en ce que** les étapes b) et c) sont effectuées simultanément.

10. Procédé selon la revendication 8 ou 9, **caractérisé en ce que**, dans une étape suivante d), des portions de connexion de zones de contact (2.1) voisines sont soudées en une rangée de paires de contacts.
